Europäisches Patentamt

European Patent Office

Office européen des brevets

(19)

(11) Veröffentlichungsnummer: **0 379 136**
**A1**

## (12) EUROPÄISCHE PATENTANMELDUNG

(21) Anmeldenummer: 90100811.0

(22) Anmeldetag: 16.01.90

(51) Int. Cl.5: **B65D 17/28**

(30) Priorität: 19.01.89 DE 3901489

(43) Veröffentlichungstag der Anmeldung:
**25.07.90 Patentblatt 90/30**

(84) Benannte Vertragsstaaten:
**AT BE CH DE DK ES FR GB GR IT LI LU NL SE**

(71) Anmelder: **Schmalbach-Lubeca AG**
**Schmalbachstrasse 1**
**D-3300 Braunschweig(DE)**

(72) Erfinder: **Georg, Bolte, Dr.**
**Klosterhof 15**
**D-3303 Vechelde(DE)**
Erfinder: **Heinecke, Dieter**
**Elternweg 10**
**D-3304 Wendeburg(DE)**
Erfinder: **Hexel, Günter**
**Friedrich-Löffler-Weg 60**
**D-3300 Braunschweig(DE)**

(74) Vertreter: **Fricke, Joachim, Dr. et al**
**Dr.-Ing. R. Döring, Dipl.- Phys. Dr. J. Fricke,**
**Dipl.-Phys. M. Einsel Josephspitalstrasse 7**
**D-8000 München 2(DE)**

(54) Leicht zu öffnende Verpackung.

(57) Es ist eine leicht zu öffnende Verpackung aus einem schalen- oder becherförmigen Unterteil mit einem Randflansch und/oder Stegbereich zur Auflage und siegelbaren Verbindung mit einem ebenen oder profilierten Deckelteil vorgesehen, bei dem die die beiden Teile bleibend und mit hoher Haftkraft verbindende Siegellinie eng begrenzte Längenabschnitte von verminderter Haftkraft aufweist, die vor allem jeweils im Bereich der Kreuzung von Siegellinie und einer mit einem Aufreiß verbundenen Griffflasche angeordnet sind.

EP 0 379 136 A1

## Leicht zu öffnende Verpackung

Die Erfindung betrifft eine leicht zu öffnende Verpackung mit den Merkmalen des Oberbegriffs des Anspruchs 1.

Bei solchen aus Kunststoff-, Metall- oder Metall/Kunsstoff-Verbundfolie hergestellten Verpackungen hat man zur Vermeidung eines Abschälens des Deckelteils vom Randflansch des Unterteils in der Deckelfolie innerhalb der Siegel- oder Verbindungslinie schon eine Schwächungslinie vorgesehen, um so einen Aufreißbereich in dem Deckelteil zu begrenzen, dem eine Grifflasche zugeordnet ist. Um den Aufreißvorgang sicher zu machen und zu verhinden, daß beim Öffnen die Aufreißstellen ungesteuert in das Deckeimaterial hineinlaufen, was ein ordnungsgemäßes Öffnen der Packung erschwert oder sogar un möglich macht, muß die Grifflasche fest und sicher mit dem Aufreißteil verbunden sein und der Aufreißvorgang sicher von der Grifflasche in die den Aufreißteil begrenzende Schwächungslinie eingeleitet werden.

Um dies zu ermöglichen, sieht die Erfindung eine Ausbildung der Verpackung gemäß der Lehre des Anspruchs 1 bzw. eine Herstellung der Verpakkung nach Anspruch 8 bzw. Anspruch 10 vor.

In jedem Fall ist die Grifflasche als einstückiger Teil des Deckelmaterials ausgebildet. Die Grifflasche selbst oder ein diese mit dem Aufreißteil verbindender Übergangsabschnitt kann dabei über den Randflansch des Unterteil hinweg nach außen vorspringen, so daß die Grifflasche leicht erfaßt werden kann. Es besteht aber auch die Möglichkeit, in einem Bereich, der außen durch den Randflansch des Unterteils umgeben wird, eine Grifflasche aus dem Deckelmaterial selbst zu bilden, indem ein entsprechender Bereich des Deckelmaterials durch eine gesonderte Schwächungs- oder Trennlinie umgrenzt ist. Durch Eindrücken dieses Bereiches kann die Grifflasche freigelegt werden. Auch hier ist es zweckmäßig, daß die Grifflasche oder ein zugehöriger Verbindungsbereich einen Steg des Unterteils kreuzt und in dem Kreuzungsbereich mit der Stegoberseite abdichtend verbunden ist. In beiden Fällen wird die Lehre bevorzugt gemäß Anspruch 2 verwirklicht. Die seitlichen Ränder der Grifflasche gehen dabei über Schwächungslinien, die gegebenenfalls den Übergangsabschnitt begrenzen, unmittelbar in die Schwächungslinien über, welche den Aufreißteil jenseits des Randflansches bzw. jenseits des Steges begrenzen. Die Verbindung der Teile kann durch Schweißen, mit Hilfe eines Haftmittels oder durch Kalt- oder Heißsiegeln erfolgen. Unter der Siegellinie wird hier die entlang einer Linie orientierte Verbindungsfläche verstanden.

Eine einfache Möglichkeit, die Hattkraft auf dem der Länge nach eng begrenzten Abschnitt der Siegellinie herabzusetzen, besteht darin, die Breite der Siegellinie in diesem Abschnitt zu verringern, und zwar so weit, daß sich beim Öffnen die Grifflasche oder der Übergangsabschnitt von dem Unterteil über die begrenzte Länge der Siegellinie abschälen läßt.

Eine andere Möglichkeit besteht darin, bei gleicher Breite der Siegellinienbreite die Siegeltemperatur und/oder den Siegeldruck und/oder die Siegelzeit auf dem begrenzten Längenabschnitt herabzusetzen, und zwar wiederum abgestim mt auf die Forderung der Abschälbarkeit des Deckelmaterials vom Unterteil entlang des begrenzten Längenabschnittes der Siegellinie.

Die Erfindung wird nachfolgend anhand schematischer Zeichnungen an mehreren Ausführungsbeispielen näher erläutert.

Es zeigen:

Figur 1 im Ausschnitt einen senkrechten Schnitt durch eine Verpackung gemäß der Erfindung in einer ersten Ausführungsform.

Figur 2 eine Draufsicht auf den Bereich, der in Figur 1 gezeigt ist.

Figur 3 im Querschnitt besondere Maßnahmen zur Ausführung des Verfahrens gemäß der Erfindung nach einer Methode.

Figur 4 in ähnlicher Darstellung wie Figur 3 Maßnahmen zur Verwirklichung des Verfahrens nach einer anderen Methode und

Figur 5 und 6 Einzelheiten zur Weiterbildung der Ausbildung nach Figur 2.

Die Verpackung besteht aus einem Unterteil 110 und einem ebenen oder profilierten Deckelteil 111. Beide Teile können aus Folien hergestellt sein. Die Folienmaterialien sind so ausgewählt, daß sich die beiden Verpackungsteile fest und abdichtend miteinander verbinden lassen.

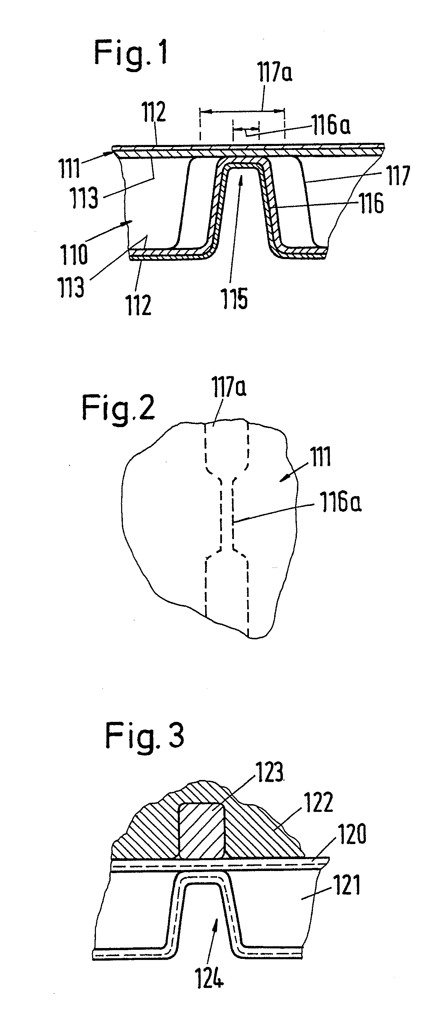

So können Unterteil und Deckelteil gemäß Figur 1 aus gleichartigen Materialien, z.B. einer Verbundfolie hergestellt sein, die aus einer Metallfolie 112 und einer schweiß-, kleb- oder siegelbaren Kunststofffolie 113 besteht.

Die beiden Teile der Verpackung sind über Flächen entlang einer Siegellinie fest und abdichtend miteinander verbunden. In Figur 1 ist die Siegellinie 117a im Bereich eines Steges 117 des Unterteils gezeigt. Die nachfolgenden Erläuterungen gelten jedoch genauso für den Fall, daß die Deckelfolie, statt mit einem Steg 117, mit einem Randflansch des Unterteils entsprechender Breite entlang der Linie 117a verbunden ist.

In Figur 1 ist mit 117 die normale Breite des Steges 115 wiedergegeben und entsprechend mit 117a etwa die normale Breite der Siegellinie.

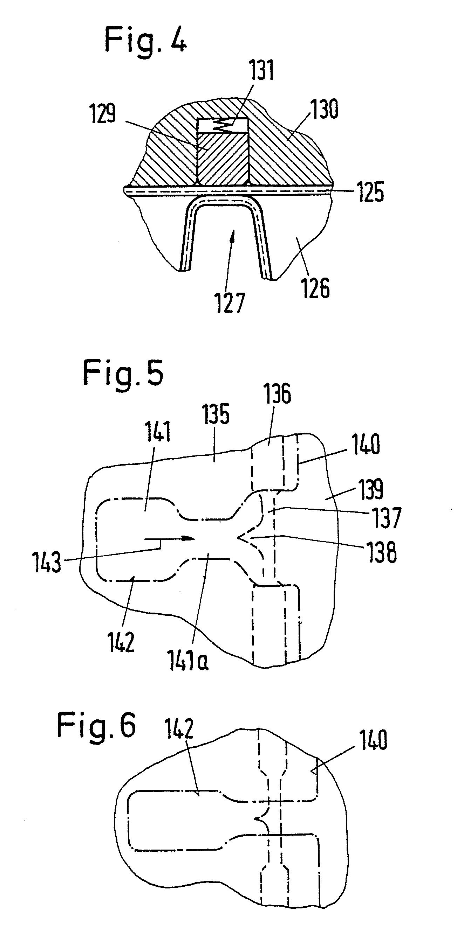

Um die Haftkraft der Verbindung über einen eng begrenzten Längenbereich zu verringern, ist gemäß der Ausführungsform nach Fig. 1 und 2 die Breite des Steges 115 auf dem ausgewählten Längenbereich verringert, wie durch den Abschnitt 116 gezeigt ist. Dies ergibt beim Verbinden zwischen dem Stegabschnitt 116 und dem Deckelteil 111 eine Verbindungsfläche 116a von gegenüber der Verbindungsfläche 117a verringerter Breite. Dadurch ist die Gesamthaftkraft auf diesem Abschnitt so verringert, daß sich beim Öffnen die Deckelfolie 111 auf diesem eng begrenzten Bereich von dem Stegabschnitt 116 abschälen läßt, während in den breiteren Bereichen 117a die Haftkraft ein solches Abschälen ausschließt. Ist also im Deckelteil 111 gemäß den Figuren 5 oder 6 durch eine Schwächungslinie 142 eine Grifflasche begrenzt die mit einem auf der anderen Seite des Randflansches oder Steges liegenden Aufreißbereich 139 des Deckelteils 135 einstückig verbunden ist, und wird im Kreuzungsbereich die Grifflasche durch entsprechende Schwächungslinien auf eine Breite höchstens gleich der Länge des Abschnittes 116a der Siegellinie von verminderter Breite begrenzt, so läßt sich beim Öffnen die Grifflasche von dem Deckelteil entlang der Schwächungslinie trennen und im Kreuzungsbereich von der Siegellinie abschälen, so daß nunmehr mit der Grifflasche der Aufreißbereich 139 auf gerissen und von der Verpackung getrennt werden kann.

Bei den Ausführungsformen nach Figur 5 und 6 ist angenommen, daß die Grifflasche 141 durch Schwächungslinie 142 begrenzt innerhalb eines von dem Randflansch des Unterteils um gebenden Bereiches angeordnet und ausgebildet ist und durch Eindrücken und Aufziehen in Richtung des Pfeiles 143 als Grifflasche benutzt werden kann. Das gleiche gilt aber auch, wenn der Steg 136 nach Figur 5 durch den Randflansch ersetzt und im Randflansch ein Abschnitt verminderter Breite 137 ausgebildet ist, so daß die Grifflasche 141 vorgestanzt über den Verpackungsunterteil nach außen vorspringt.

Zur Erleichterung oder Einleitung des Abschälvorganges kann der verschmälerte Bereich 137 des Steges oder Randflansches einen in Richtung der Grifflasche 141 verbreiterten, vorzugsweise spitz zulaufenden Einleitungsabschnitt 138 aufweisen. (vgl.Fig. 5 und 6).

Statt im Bereich des begrenzten Längenabschnittes der Schwächungslinie die Haftkrart durch Verminderung der Breite der Verbindungsfläche herbzusetzen, können andere Maßnahmen vorgesehen sein.

Figur 3 zeigt den Augenblick des Heißsiegelns zwischen sich berührenden Flächen (Steg 124) von Unterteil 121 und Deckelteil 120. Mit 122 ist ein Heißsiegelwerkzeug vorgesehen, das entlang der Siegellinie mit dem Deckelteil 120 Kontakt hat und die Siegelhitze in den Siegelbereich einleitet. Normalerweise erstreckt sich das Siegelwerkzeug 122 satt über den Berührungsbereich zwischen den Teilen, um so die Verbindung entlang der Siegellinie auszubilden. Im dargestellten Beispiel ist in das Siegelwerkzeug 122 ein wärmeisolierender Teil 123 von begrenzter Länge eingesetzt, der in einem Längenbereich der Siegellinie die direkte Einleitung der Hitze in den Siegelbereich verhindert, so daß in diesem Bereich die Siegelung mit verminderter Wärme erfolgt, was zu einer verminderten Haftkraft führt.

Statt dessen kann die Anordnung gemäß Figur 4 ausgebildet sein. Um hier entlang des Steges 127 die Siegellinie zwischen Unterteil 126 und Deckelteil 125 auszubilden, ist ein die Siegelhitze in die Siegellinie einleitendes Werkzeug 130 vorgesehen. In diesem Fall wird die Siegelhitze durch einen wärmeleitenden Einsatz 129 auch direkt in den begrenzten Längenbereich von verminderter Siegelhaftkraft eingeleitet. Der Einsatz 129 ist jedoch über Feder 131 abgefedert, so daß der Siegeldruck auf dem begrenzten Längenbereich deutlich vermindert ist, was zu einer verminderten Haftkraft führt. Einsatz 129 kann aber auch so ausgebeildet oder angeordnet sein, daßüber ihn die Siegelzeit kürzer als in den anderen Bereichen der Siegellienie bemessen werden kann.

Die zuvor beschriebenen Maßnahmen können auch in beliebiger Weise miteinander kombiniert werden, um die Haftkraft in optimaler Weise auf den Abschälvorgang auf dem begrenzten Längenbereich der Siegellinie einstellen zu können.

## Ansprüche

1. Leicht zu öffnende Verpackung, bestehend aus einem schalen- oder becherförmigen Unterteil mit Randflansch und/oder Stegbereichen zur Auflage und abdichtenden Verbindung mit einem ebenen oder profilierten Deckelteil, wobei der Deckelteil eine innerhalb der Verbindungs- oder Siegellinie verlaufende Schwächungslinie zur Begrenzung eines Aufreißteils im Deckelteil sowie eine Grifflasche aufweist und aus einer Kunststoff-, Metalloder Metall/Kunststoffverbundfolie besteht, dadurch **gekennzeichnet**, daß die die beiden Teile (110, 111) bleibend und mit hoher Hattkraft verbindende Verbindungsfläche wenigstens einen eng begrenzten Längenabschnitt (116a) von deutlich verminderter Haftkraft aufweist.

2. Verpackung nach Anspruch 1, dadurch **gekennzeichnet**, daß der begrenzte Längenabschnitt (116a) von deutlich verminderter Haftkraft im Kreuzungsbereich zwischen Siegellinie und Grifflasche (141) bzw. einem diese mit dem Aufreißbereich verbindenden Verbindungsabschnitt angeordnet ist.

3. Verpackung nach Anspruch 1 oder 2, dadurch **gekennzeichnet**, daß in dem oder jedem der Länge nach eng begrenzten Abschnitt (116a) von verminderter Haftkraft diese so begrenzt ist, daß die Teile (110, 111) in diesem Bereich unter Überwindung der Haftkraft voneinander abschälbar sind.

4. Verpackung nach einem der Ansprüche 1 bis 3, dadurch **gekennzeichnet**, daß der oder jeder der Länge nach begrenzte Abschnitt (116a) der Siegel linie von verminderter Haftkrart eine verminderte Siegelbreite (116a) im Vergleich zu der Siegelbreite der übrigen Längenbereiche der Siegellinie aufweisen.

5. Verpackung nach einem der Ansprüche 2 bis 4, dadurch **gekennzeichnet**, daß die Länge des in der Länge begrenzten Siegellinienabschnittes (137) von verminderter Haftkrart etwa gleich oder größer als die Breite des die Siegellinie (136) kreuzenden und durch Schwächungslinien begrenzten Grifflaschen- oder Verbindungsbereiches (141,141a) im Deckelteil ist.

6. Verpackung nach einem der Ansprüche 2 bis 5, dadurch **gekennzeichnet**, daß der den Siegelabschnitt (116a) von verminderter Haftkratt aufweisende Stegbereich (115) des Unterteils (110) eine gegenüber den anderen Bereichen (117) der Siegellinie verringerte Breite aufweist.

7. Verpackung nach Anspruch 6, dadurch **gekennzeichnet**, daß der Stegbereich (115) von verminderter Breite mittig einen zur Seite der Grifflasche (141) - vorzugsweise spitz zulaufenden - vorspringenden Stegbereich (138) aufweist.

8. Verfahren zum Verbinden des Deckelteils und des Unterteils einer Verpackung nach Anspruch 1 durch Heißsiegeln, dadurch **gekennzeichnet**, daß die Verbindungsfläche zwischen den beiden Verpackungsteilen an dem eng begrenzten Längenabschnitt der Breite nach eingeschnürt wird.

9. Verfahren nach Anspruch 8, dadurch **gekennzeichnet**, daß im Unterteil im Bereich des längenbegrenzten Abschnittes von verminderter Haft kraft der Siegellinie schmalere Stege zur Aufnahme der Verbindungs- oder Siegeilinie ausgebildet werden.

10. Verfahren zum Verbinden des Deckelteils und des Unterteils einer Verpackung nach Anspruch 1 durch Heißsiegeln, dadurch **gekennzeichnet**, daß im Bereich der der Länge nach begrenzten Abschnitte von vermimderter Haftkraft der Siegellinie die Siegeltemperatur und/oder der Siegeldruck und/oder die Siegelzeit niedriger als in den übrigen Abschnitten der Siegellinie gehalten wird.

11. Verfahren nach Anspruch 10, dadurch **gekennzeichnet**, daß die Siegeltemperatur in dem begrenzten Längenabschnitt der Siegellinie von verminderter Haftkratt nicht direkt, sondern von einseitig oder beidseitig gegenüber der Siegellinie seitlich versetzten Bereichen aus indirekt in den Siegelabschnitt eingeleitet wird.

# Fig. 1

# Fig. 2

# Fig. 3

# Fig. 4

131
129
130
125
126
127

# Fig.5

135 136
141
140
139
137
138
143
142
141a

# Fig.6

142
140

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 008 545 (L. VUORENTO) <br> * Seite 9, Absatz 2; Seite 10, Absatz 1; Figuren 1,3,6 * <br> ----- | 1-4,10 | B 65 D 17/28 |

RECHERCHIERTE SACHGEBIETE (Int. Cl.5)

B 65 D

Der vorliegende Recherchenbericht wurde für alle Patentansprüche erstellt

| Recherchenort | Abschlußdatum der Recherche | Prüfer |
|---|---|---|
| BERLIN | 14-02-1990 | LORENZ P A |